# EUROPEAN PATENT SPECIFICATION

(11) **EP 1 401 688 B1**
(45) Date of publication and mention of the grant of the patent: **29.12.2004**
(21) Application number: 02746882.6
(22) Date of filing: 03.07.2002
(51) Int. Cl.: B60S 5/00, B62D 27/02

(54) **PROCEDURE FOR REPAIRING VEHICLE BODIES WITH ADHESIVELY BONDED REPLACEMENT PANELS**
VERFAHREN ZUM REPARIEREN VON FAHRZEUGKAROSSERIEN MIT VERKLEBTEN ERSATZPLATTEN
PROCEDE DE REPARATION DE CARROSSERIES DE VEHICULES A L'AIDE DE PANNEAUX DE REMPLACEMENT FIXES PAR ADHESION

(30) Priority: 03.07.2001 US 302756 P
(43) Date of publication of application: 31.03.2004
(73) Proprietor: LORD CORPORATION, Cary, NC 27512-8012 (US)
(72) Inventor: MILLER, Jeffrey, A., Erie, PA 16509 (US)
(74) Representative: Weber, Thomas, Dr.Dipl.-Chem.
(86) International application number: PCT/US2002/021255
(87) International publication number: WO 2003/004327

(56) References cited:
- US-A- 3 470 048
- US-A- 4 135 017
- US-A- 4 707 391
- A. ROBINSON: "Repair of Vehicle Bodies" 1993 , BUTTERWORTH HEINEMANN , OXFORD GB XP002213741 020617 page 212 -page 216 page 350 -page 354

## Description

### Background of the Invention

In the repair of automotive body panels with lapping of a new panel to a to-be-repaired panel, read-through of the structural adhesive is seen after thermal cycling due to differences in the coefficient of linear thermal expansion. The book "Repair of vehicle bodies" by Heinemann Butterworth discloses methods for repairing vehicle bodies using adhesively bonded repair panels. The repair panels are beveled at a non specified angle. Read-through or "ghosting" is seen in the painted and/or filled panel when the edge of the new panel was beveled at an angle of 20°. Furthermore, the extent of the overlap of the panels has been found to directly impact the level of read-through.

### Summary of the Invention

The invention resides in a method for repairing automotive body panels, comprising grinding the edge of the new panel to a taper of 10 degrees or less, applying adhesive in overlapping relation to the panel to be repaired, lapping the panels with an overlap of from 1,90cm to 7,62 cm (¾ to 3 inches) and allowing the adhesive to develop bond strength. The repaired panels are finished by filling, and painting. The repaired panel exhibits improved reduction in read-through of the adhesive.

A summary step-wise method to repair an automotive body panel comprises:
a) removal of surface corrosion, or coatings on an original body panel to expose bare metal at an edge section;
b) removal of coating on the inward face of a replacement panel, to a predetermined edge section to remove any E-coating, primers, coatings and/or galvanizing layers;
c) grinding a bevel of 10 degrees or less on the edge of the replacement panel;
d) applying a room temperature curable adhesive and spacer beads in a bondline to the inward facing side of the edge revealed in step b) of the new panel;
e) securing the bonded panels together;
f) allowing said adhesive to cure;
g) applying a fiber reinforced body filler;
h) applying a non-fiber reinforced body filler; and
applying finish coating(s).

### Brief Description of the Drawings

FIG 1 is a crossection view of an unbonded replacement automotive body panel section illustrating the 10° bevel at the bonding edge section portion.

FIG. 2 is a crossection view of a replacement panel bonded to the original automotive body panel with adhesive therebetween.

### Detailed Description of the Preferred Embodiments

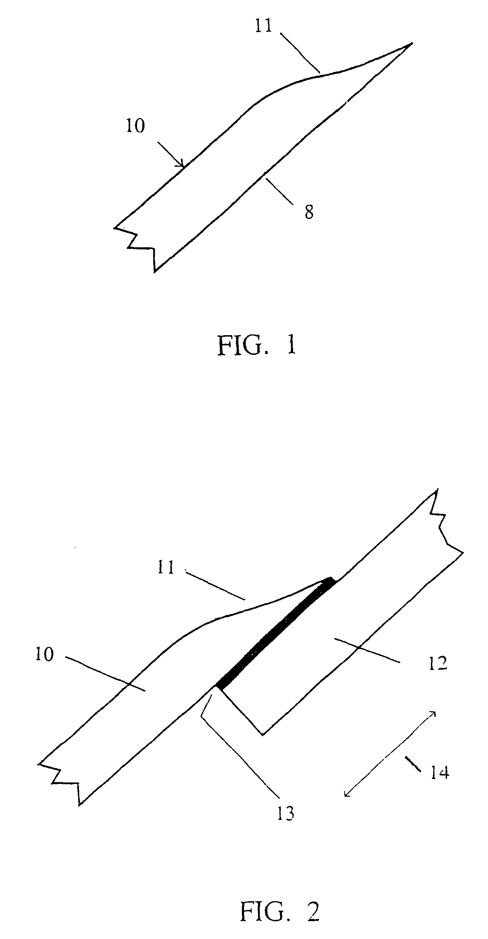

With reference to FIGS. 1 and 2, wherein like numerals depict like structures, in FIG. 1, a replacement panel 8 is either a roof panel, a left or right rear quarter panel, or a body panel. These replacement panels are commercially sold to the autobody repair industry. The panels typically contain metal treatments such as galvanizing, e-coat, and/or other corrosion-proofing coatings. In conventional body repairs, the replacement panels are conventionally welded, ground and finished with conventional body fillers. The present invention is an adhesive bonding method that is suitable in place of welding wherein a critical cosmetic defect, namely, ghosting of the adhesive is eliminated. Replacement body panel 8 in FIG. 1 has a cosmetic side 10, that is the side to be painted. The underside surface of the replacement panel is a bonding surface. At 11, the section joint edge has been ground to a taper of 10°. A taper of 10° or less is similar to a knife edge. FIG. 2 illustrates the replacement panel 10 lap-bonded with adhesive 13 to the original panel 12 on the vehicle. The overlapped bonding section edge area is depicted by the lap length 14 and ranges from 1,27 to 7,62cm (0.5 to 3 inches). Preferably the extent of lapping of the replacement panel over the original panel ranges from 1,90 to 2,54cm (0.75 to 1 inch).

### Adhesives

The bond line thickness of adhesive at 13 is controlled by incompressible beads incorporated into the bond line or as is preferred, incompressible beads are pre-mixed with the adhesive. The thickness of the bond line is not less than the diameter of the incompressible beads. Ceramic, glass or silicate spheres are preferred, although beads made from thermoset or thermoplastic materials are also suitable. Glass beads are sold by C.E.D. Processed Minerals, Inc. under the GORESIL® mark; Nylon beads are sold under the ORGASOL® mark of Elf Atochem; and Ceramic beads are sold by 3M. The diameter of the incompressible beads is preferably from 0,0127cm - 0,127cm (0.005 in. - 0.050 inches), and preferably the diameter of the beads is 0,025 to 0,050cm (0.010 to 0.020 inches). Structural acrylic adhesives incorporating incompressible glass beads are disclosed in U.S. Pat. No, 5,487,803. The US 5,487,803 patent discloses a method of forming a hem flange assembly in which adhesive and beads are applied to a hem flange and compression force applied to provide a mechanical interlocking of the panels of the hem flange. The present invention is not directed to providing a mechanical interlocking. The present method is adapted to lap-bonding of the aforementioned outer metal body shell panels.

Acrylic structural adhesives are disclosed in U.S. Pat. No. 4,051,195, U.S. Pat. No. 5,641,834 and U.S. Pat. No. 5,710,235. Epoxy-acrylic adhesives can be used. Suitable or adaptable epoxyacrylate adhesives are disclosed in U.S. 4,803,232 Entitled Rubber-Modified Epoxy Adhesive Compositions; U.S. 4,766,186 Entitled Epoxy Adhesive; and in U.S. 4,426,243 Entitled Room-Temperature-Curable, Quick-Setting Acrylic/Epoxy Adhesives And Methods Of Bonding. Such acrylate modified epoxy coating compositions comprise an epoxide, a polyacrylate or polymethacrylate, and a polyamine. Suitable epoxides, polyacrylates, polymethacrylates, and polyamines are disclosed in U.S. Pat. No. 4,051,195. The acrylic adhesives typically comprise fillers, a mixture of one or more olefinic reactive monomers such as methyl methacrylate or methacrylic acid and curing agents, with cure or polymerization being effected through a redox initiation polymerization mechanism. The acrylic adhesives can contain other additives for improving curie rate, adhesion to substrate materials, environmental resistance, impact strength, flexibility, heat resistance, and the like.

Suitable adhesive may include materials denoted as "pressure sensitive", provided that the adhesive cures under ambient conditions to form a tough, cohesive material.

Suitable commercially available structural adhesives adapted for use in the method are available from Lord Corporation under the FUSOR® mark; from SEM Products, Polymer Engineering Corp. under the Duramix ® mark; from 3M under the Automix® mark, and from Kent Automotive, division of Premier Farnell plc, West Sussex, UK.

### Repair Procedure

The details of the preferred repair method are outlined in the following numbered steps as a best mode for carrying out the invention.

1. Preparation of the original panel. A section or all of the original panel is removed leaving a predetermined joint edge. The contour of the joint edge results from removal of the original panel or section thereof which is to be replaced. The section edge refers to the sections of original panel that will be overlapped with the new or replacement panel and bonded in the lapping section with adhesive. The outward facing side of the original panel is ground to the desired lap length to remove any corrosion, E-coating, primers, coatings and/or galvanizing present. After grinding, bare original metal is exposed. Care is taken not to damage the corners or thin the metal of the original panel.

2. The section edge of replacement panels must be prepared by grinding back on the outward face, a predetermined width corresponding to the intended lap bond (e.g., 2.5-cm (1-inch) area) of the inward-facing side (adhesive contact side) of the new panel to remove any E-coating, primers, coatings and galvanizing present.

3. The outer, i.e., outward facing (cosmetic) side, of the new panel is tapered in a pre-bevel of 10 degrees or less using a grinder at the section joint edge of the new panel as depicted in FIG. 1.

4. The vehicle should be at rest and under even support at normal suspension points.

5. The new panel is pre-fitted to ensure proper alignment and lapping at the section edges.

6. Adhesive Preparation: Any of the above mentioned conventional structural adhesive is dispensed by applying a small amount of adhesive. Preferred adhesives are 2-part, room temperature cured acrylic adhesives available under the Fusor® mark of Lord Corporation. Metal Bonding Adhesive #108B is available in cartridges adapted to ensure an even flow of both components. Then, attach a mixing tip and dispense a mixer's length of the adhesive.

The adhesive provide an open time typically of about 40 to 50 minutes to apply the adhesive and assemble the components.

7. Apply a 0.64- to 0.98-cm (1/4- to 3/8-inch) bead of Fusor Metal Bonding Adhesive to the prepared edges of the new panel, including the 2.5-cm (1-inch) prepared section of the joint area.

8. Properly position the new panel. Once this panel has been positioned, do not pull it away from the vehicle. If repositioning is necessary, slide the panel. This maintains proper contact between the two panels.

9. Clamp tightly and evenly. In the present invention, clamps and/or screw fasteners are preferably used to hold bonding sections of the replacement panel in place over the original body panel until the adhesive develops structural strength. A low to moderate clamping force less than the forces capable of deforming the steel body panels is applied. The spacer beads in the adhesive will assist in preventing over-clamping. Screws are preferably applied in hard-to-clamp areas. Where possible, excess adhesive is wiped from the panel before it cures.

10. The adhesive is allowed to cure. A sufficient time is 1-1/2 to 2 hours using, for example, with FUSOR adhesives. The adhesive may be a little "tacky" on the surface after curing. Any clamps and/or screws used to hold the bonded panels together are removed.

11. Excess adhesive is removed from the cosmetic repair area.

12. Any screw holes should be filled with repair adhesive, for example, a plastic body cosmetic repair adhesive. These repair adhesives are vailable form Lord Corporation (Stock #102/103). A first applied layer of body filler over the lap joint must be a fiber-filled body filler, and placed directly on the bonded section seam. The repair is completed by applying non-fiber-filled conventional body filler. The body fillers are allowed to sure and are rough-sanded after the adhesive has fully cured. A block-sanding is followed by prime coat painting, followed by finish coating of paint per the vehicle manufacturer's recommendations. Major sources of body filler include Evergiass® products of Evercoat Company, Fibral® products of U-POL, and Duraglas® products of U.S. Chemical.

13. Optionally and preferredly a seam sealer can be used. A commercial Seam Sealer (Stock #123/126 or #123EZ/126EZ) or Fusor Match Urethane Sealer/Adhesive (Stock #800/801) is available form Lord Corporation wherever a cosmetic seam sealer is desired. It is recommended to not hurry the process. Make sure that all cure time requirements are met or exceeded to provide better quality.

## Claims

1. A method to repair an automotive body panel comprising:
a) removal of surface corrosion, or coatings on an original body panel to expose bare metal at a predetermined edge section;
b) removal of coating on the inward face of a replacement panel, to a predetermined edge section to expose bare metal;
c) grinding a bevel of 10 degrees or less on the edge of the replacement panel;
d) applying a room temperature curable adhesive with spacer beads in a bondline thickness to the inward facing side of the edge revealed in the replacement panel in step b);
i) securing the original and replacement panels together with adhesive therebetween in the bonding section, said section having a lap length of from 1,27 to 7,62 cm and a bondline thickness determined by said spacer beads;
j) allowing said adhesive to cure;
k) applying a fiber reinforced body filler;
l) applying a non-fiber reinforced body filler over said fiber reinforced body filler; and
m) applying finish coating(s).

2. The method of claim 1 wherein the adhesive bond line thickness is from 0,0127cm - 0,127cm.

3. The method of claim 1 wherein said lap length of the replacement panel over the original panel ranges from 1,90 to 2,54 cm.

## Patentansprüche

1. Verfahren zur Reparatur eines Kraftfahrzeugkarosserieblechs, umfassend das:
a) Entfernen von Oberflächenkorrosion oder Beschichtungen auf einem ursprünglichen Karosserieblech zur Freilegung von bloßem Metall an einem vorbestimmten Kantenabschnitt;
b) Entfernen von Beschichtung auf der nach innen gerichteten Stirnfläche eines Ersatzblechs bis zu einem vorbestimmten Kantenabschnitt, um bloßes Metall freizulegen;
c) Schleifens einer Fase von 10° oder weniger an der Kante des Ersatzblechs;
d) Auftragen eines bei Raumtemperatur härtbaren Klebstoffs mit Distanzkügelchen mit der Dicke der Klebschicht auf die nach innen gerichtete Stirnseite der Kante, die in Schritt b) am Ersatzblech freigelegt wurde;
i) Befestigen des ursprünglichen und des Ersatzblechs aneinander durch dazwischen im Klebebereich befindlichen Klebstoff, wobei der Bereich eine Überlappungslänge von 1,27 bis 7,62 cm und eine durch die Distanzkügelchen festgelegte Klebschichtdicke aufweist;
j) Härtenlassen des Klebstoffs;
k) Auftragen eines faserverstärkten Füllstoffs;
l) Auftragen eines nicht faserverstärkten Füllstoffs auf den faserverstärkten Füllstoff, und das
m) Auftragen von Decklack(en).

2. Verfahren nach Anspruch 1, wobei die Dicke der Klebschicht 0,0127 cm - 0,127 cm beträgt.

3. Verfahren nach Anspruch 1, wobei die Überlappungslänge des Ersatzblechs über dem ursprünglichen Blech von 1,90 bis 2,54 cm reicht.

## Revendications

1. Procédé de réparation d'un panneau de carrosserie de véhicule, comprenant :
a) l'enlèvement d'une corrosion de surface, ou de revêtements sur un panneau de carrosserie original afin d'exposer le métal nu à une section de bord prédéterminée ;
b) l'enlèvement d'un revêtement sur la face intérieure d'un panneau de remplacement, à une section de bord prédéterminée afin d'exposer le métal nu ;
c) le meulage d'un biseau de 10 degrés ou moins sur le bord du panneau de remplacement ;
d) l'application d'un adhésif durcissable à température ambiante avec des moulures d'écartement dans une épaisseur de ligne de collage sur le côté orienté vers l'intérieur du bord mis à nu dans le panneau de remplacement lors de l'étape b) ;
i) la fixation du panneau de remplacement et du panneau original l'un à l'autre en appliquant un adhésif entre les deux dans la section de collage, ladite section présentant une longueur de recouvrement comprise entre 1,27 et 7,62 cm et une épaisseur de ligne de collage déterminée par lesdites moulures d'écartement ;
j) le durcissement dudit adhésif ;
k) l'application d'un agent de remplissage de carrosserie renforcé par des fibres ;
l) l'application d'un agent de remplissage de carrosserie non renforcé par des fibres sur ledit agent de remplissage de carrosserie renforcé par des fibres ; et
m) l'application d'un ou de plusieurs revêtements de finition.

2. Procédé selon la revendication 1, dans lequel l'épaisseur de la ligne de collage de l'adhésif est comprise entre 0,0127 cm et 0,127 cm.

3. Procédé selon la revendication 1, dans lequel ladite longueur de recouvrement du panneau de remplacement sur le panneau original est comprise entre 1,90 et 2,54 cm.
